# EUROPÄISCHE PATENTSCHRIFT

(11) **EP 2 406 026 B1**
(45) Veröffentlichungstag und Bekanntmachung des Hinweises auf die Patenterteilung: **30.01.2013**
(21) Anmeldenummer: 10712317.6
(22) Anmeldetag: 10.03.2010
(51) Int. Cl.: B22D 11/126, B08B 7/02, B23C 3/14, B23K 37/08

(54) **VORRICHTUNG ZUM ENTGRATEN METALLISCHER BLÖCKE**
DEVICE FOR DEBURRING METAL BLOCKS
DISPOSITIF D'ÉBAVURAGE DE BLOCS MÉTALLIQUES

(30) Priorität: 11.03.2009 AT 3902009
(43) Veröffentlichungstag der Anmeldung: 18.01.2012
(73) Patentinhaber: Stommel + Voos Marking Technologies GmbH, 42697 Solingen (DE)
(72) Erfinder: OHLER, Michael, A-4846 Redlham (AT); BREINER, Ivan, A-4840 Vöcklabruck (AT); ACHLEITNER, Karl, A-4845 Rutzenmoos (AT)
(74) Vertreter: Hübscher, Helmut
(86) Internationale Anmeldenummer: PCT/EP2010/001487
(87) Internationale Veröffentlichungsnummer: WO 2010/102799

(56) Entgegenhaltungen:
- EP-A1- 0 325 681
- EP-A1- 0 654 313
- WO-A1-90/06195
- AT-U1- 10 514
- JP-A- 4 270 044

## Beschreibung

Die Erfindung bezieht sich auf eine Vorrichtung zum Entgraten metallischer Blöcke mit einem Rotor, der auf über den Umfang verteilten, achsparallelen Achsen, die in End- und Zwischenlagern mehrfach abgestützten sind, drehbar gelagerte Entgratungshämmer trägt, die im Bereich der Zwischenlager diese Zwischenlager in axialer Richtung überbrückende Kopfabschnitte aufweisen.

Beim Stranggießen ist es bekannt, den Gussstrang nach seinem Erstarren durch ein Brennschneiden in Blöcke vorgegebener Länge zu teilen. Dabei entsteht durch das sich beim Austritt aus dem Schneidspalt entspannende Brenngas entlang des Austrittsrandes der Brennschneidflächen ein sogenannter Brennbart aus flüssigem Metall und Brennschlacke. Die durch ein Brennschneiden abgelängten Blöcke sind daher an beiden Längsenden zu entgraten. Zu diesem Zweck ist es bekannt (EP 0 654 313 B1), einen Rotor einzusetzen, der über seinen Umfang verteilte Entgratungshämmer trägt, die auf zum Rotor parallelen Achsen drehbar gelagert sind und den Brennbart nach einer entsprechenden Anstellung an den zu entgratenden Block fliehkraftbedingt abtragen. Da die die Entgratungshämmer aufnehmenden Achsen aufgrund der auftretenden Fliehkräfte über Zwischenlager mehrfach abgestützt werden müssen, ergibt sich das Problem, dass in der Reihe der auf einer Achse gelagerten Entgratungshämmer im Bereich der Zwischenlager Lücken auftreten, die Anlass für einen ungleichmäßigen Abtrag des Brennbarts geben, selbst wenn versucht wird, durch einen gegenseitigen axialen Versatz der Zwischenlager der über den Umfang verteilten Achsen diesen Einfluss auf das Entgratungsergebnis zu verringern.

Um die axiale Arbeitsbreite der auf parallelen Achsen eines Rotors drehbar gelagerten Hämmer zum Entgraten eines metallischen Blockes zu vergrößern, ist es bekannt (WO 90/06195 A1), die jeweils endseitigen Entgratungshämmer eines Satzes von Entgratungshämmern mit einem nach außen verbreiterten Hammerkopf zu versehen, was jedoch die Schwierigkeiten nicht berührt, die sich mit der Zwischenlagerung der die Entgratungshämmer aufnehmenden Achsen ergeben. Erst wenn die beidseits eines Zwischenlagers angeordneten Hämmer gegeneinander vorstehende, das Zwischenlager in axialer Richtung überbrückende Kopfabschnitte aufweisen, wie dies aus der den nächstliegenden Stand der Technik darstellenden JP 04-270044 A bekannt ist, kann auch im Bereich der Zwischenlager ein gleichmäßiger Abtrag des Brennbarts erreicht werden, was allerdings mit einer ungünstigen, unsymmetrischen Belastung der Entgratungshämmer erkauft wird.

Der Erfindung liegt somit die Aufgabe zugrunde, eine Vorrichtung zum Entgraten eines metallischen Blocks der eingangs geschilderten Art so auszugestalten, dass ein gleichmäßiger Abtrag des Brennbarts über die Rotorlänge bei einer vorteilhaften Belastung der Entgratungshämmer sichergestellt werden kann.

Die Erfindung löst die gestellte Aufgabe dadurch, dass die Entgratungshämmer im Bereich der Zwischenlager mit zwei Fußabschnitten beidseits des Zwischenlagers auf der Achse gelagert sind und einen das Zwischenlager überbrückenden Kopfabschnitt bilden.

Durch das Vorsehen von Entgratungshämmern, die zwei das Zwischenlager zwischen sich aufnehmende Fußabschnitte und einen das Zwischenlager überbrückenden Kopfabschnitt bilden, wird ebenfalls eine durchgehende, nicht durch Lücken unterbrochene Aufeinanderfolge von Hammerköpfen als Voraussetzung für einen gleichmäßigen Abtrag des Brennbarts durch die Hammerköpfe erreicht, doch bringt diese Ausführungsform vorteilhafte, symmetrische Belastungsverhältnisse mit sich, wobei sich ein hinsichtlich der Entgratung günstiger, über das Zwischenlager durchgehender Hammerkopf ergibt.

Besonders gute Abtragverhältnisse können dadurch erzielt werden, dass die Entgratungshämmer zwei in Umlaufrichtung des Rotors hintereinander angeordnete Arbeitskanten aufweisen, weil in diesem Fall durch die einzelnen Hammerköpfe der Brennbart in zwei Schichten abgetragen wird.

In der Zeichnung ist der Erfindungsgegenstand beispielsweise dargestellt. Es zeigen
- Fig. 1: eine erfindungsgemäß Vorrichtung zum Entgraten metallischer Blöcke schematisch in einem Querschnitt durch den Rotor und
- Fig. 2: den Rotor ausschnittsweise in einem Schnitt nach der Linie II-II der Fig. 1 in einem größeren Maßstab.

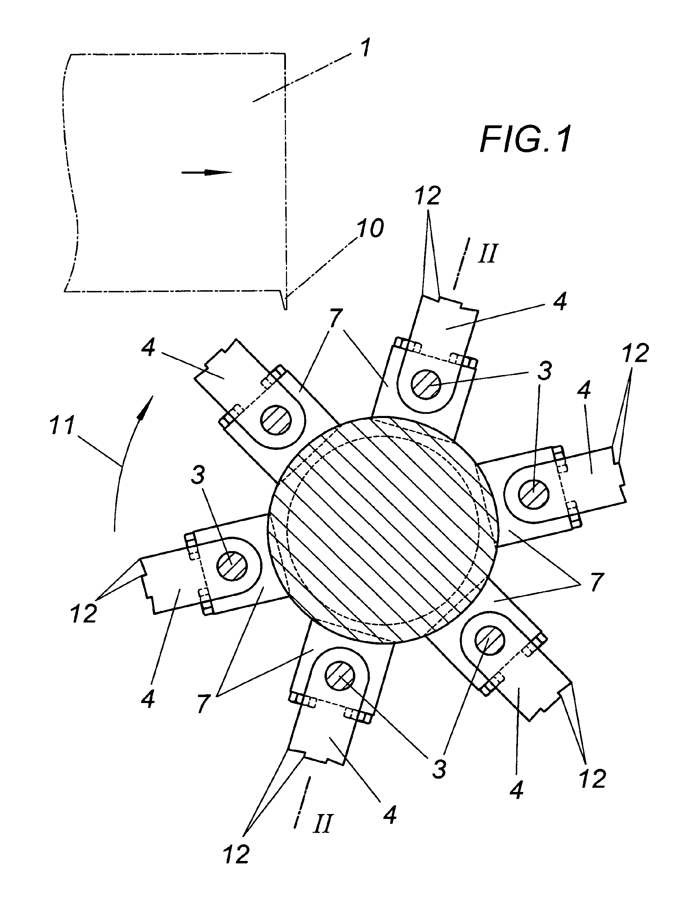

Wie insbesondere der Fig. 1 entnommen werden kann, weist die Vorrichtung zum Entgraten eines metallischen Blocks 1 einen Rotor 2 auf, der über seinen Umfang verteilte, achsparallele Achsen 3 zur drehbaren Lagerung von Entgratungshämmern 4, 5 trägt. Die Achsen 3 sind in Endlagern 6 und Zwischenlagern 7 mehrfach gegenüber dem Rotor 2 abgestützt, um die auf die Entgratungshämmer 4 einwirkenden Fliehkräfte aufnehmen zu können. Zur einfacheren Montage sind diese End- und Zwischenlager 6, 7 am Rotor 2 festgeschraubt.

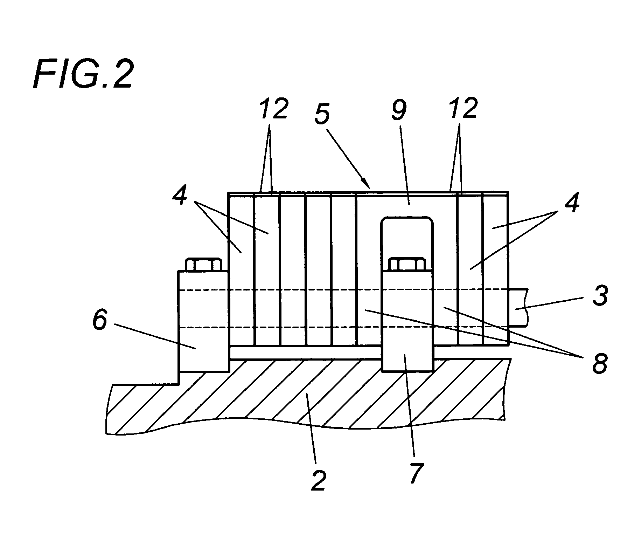

Wie aus der Fig. 2 entnommen werden kann, ergäben sich beim durchgehenden Einsatz gleicher Entgratungshämmer 4 über die gesamte Länge der Achsen 3 im Bereich der Zwischenlager 7 Lücken, die das Entgratungsergebnis nachteilig beeinflussen. Um diese Lücken zu vermeiden, werden im Bereich der Zwischenlager 7 Entgratungshämmer 5 eingesetzt, mit deren Hilfe die Zwischenlager 7 überbrückt werden können.

Um eine solche lückenlose Kopffolge zu sichern, weisen die im Bereich der Zwischenlager 7 vorgesehenen Entgratungshämmer 5 zwei Fußabschnitte 8 auf, mit deren Hilfe die Entgratungshämmer 5 die Zwischenlager 7 gabelartig umfassen und beidseits der Zwischenlager 7 auf der jeweiligen Achse 3 gelagert sind. Die beiden Fußabschnitte 8 sind mit einem Kopfabschnitt 9 verbunden, der das Zwischenlager 7 überbrückt, sodass ein über das Zwischenlager 7 in axialer Richtung durchgehender Hammerkopf erhalten wird.

Damit beim Entgraten des metallischen Blocks 1 der Brennbart 10 vorteilhaft mit Hilfe der Hammerköpfe abgetragen werden kann, können die Entgratungshämmer 4, 5 Hammerköpfe mit zwei in Umlaufrichtung 11 des Rotors 2 hintereinander angeordneten Arbeitskanten 12 aufweisen, mit deren Hilfe die Dicke der jeweils abzutragenden Späne verringert wird, was sich hinsichtlich der Gleichmäßigkeit des Abtrags des Brennbarts 11 und des Verschleißverhaltens der Entgratungshämmer 4, 5 vorteilhaft auswirkt.

## Patentansprüche

1. Vorrichtung zum Entgraten metallischer Blöcke (1) mit einem Rotor (2), der auf über den Umfang verteilten, achsparallelen Achsen (3), die in End- und Zwischenlagern (6, 7) mehrfach abgestützten sind, drehbar gelagerte Entgratungshämmer (4, 5) trägt, die im Bereich der Zwischenlager (7) diese Zwischenlager (7) in axialer Richtung überbrückende Kopfabschnitte (9) aufweisen, **dadurch gekennzeichnet, dass** die Entgratungshämmer (5) im Bereich der Zwischenlager (7) mit zwei Fußabschnitten (8) beidseits des Zwischenlagers (7) auf der Achse (3) gelagert sind und einen das Zwischenlager (7) überbrückenden Kopfabschnitt (9) bilden.

2. Vorrichtung nach Anspruch 1, **dadurch gekennzeichnet, dass** die Entgratungshämmer (5) zwei in Umlaufrichtung (11) des Rotors (2) hintereinander angeordnete Arbeitskanten (12) aufweisen.

## Claims

1. Device for deburring metal blocks (1), having a rotor (2) which carries deburring hammers (4, 5) which are rotatably mounted on axially parallel spindles (3) which are distributed over the circumference and are supported multiple times in end and intermediate bearings (6, 7), which deburring hammers comprise in the region of the intermediate bearings (7) head portions (9) which bridge these intermediate bearings (7) in the axial direction, **characterised in that** the deburring hammers (5) are mounted on the spindle (3) in the region of the intermediate bearings (7) with two foot portions (8) on both sides of the intermediate bearing (7) and form a head portion (9) which bridges the intermediate bearing (7).

2. Device as claimed in claim 1, **characterised in that** the deburring hammers (5) comprise two working edges (12) which are disposed one behind the other in the circumferential direction (11) of the rotor (2).

## Revendications

1. Dispositif pour ébavurage de blocs métalliques (1), avec un rotor (2) qui porte des marteaux d'ébavurage (4, 5) montés rotatifs sur des axes (3) parallèles entre eux, répartis sur la circonférence, prenant appui plusieurs fois dans des paliers d'extrémité et des paliers intermédiaires (6, 7) et présentant dans la zone des paliers intermédiaires (7) des sections de tête (9) pontant, en direction axiale, ces paliers intermédiaires (7), **caractérisé en ce que** les marteaux d'ébavurage (5) sont placés dans la zone des paliers intermédiaires (7) avec deux sections de pied (8), de part et d'autre du palier intermédiaire (7), sur l'axe (3) et forment une section de tête (9) pontant le palier intermédiaire (7).

2. Dispositif selon la revendication 1, **caractérisé en ce que** les marteaux d'ébavurage (5) présentent deux bords de travail (12) disposés l'un derrière l'autre dans le sens de rotation (11) du rotor (2).
